# EUROPEAN PATENT SPECIFICATION

(11) **EP 1 486 111 B1**
(45) Date of publication and mention of the grant of the patent: **19.08.2009**
(21) Application number: 04425257.5
(22) Date of filing: 07.04.2004
(51) Int. Cl.: A01G 3/06, A01D 34/416, A01D 34/66, A01D 34/84

(54) **A flexible cutting group for bush-cutters**
Biegsames Schneidwerkzeug für Buschschneider
Outil de coupe souple pour débroussailleuses

(30) Priority: 10.06.2003 IT AR20030029
(43) Date of publication of application: 15.12.2004
(73) Proprietor: Brogi, Loriano, 52020 Castelfranco di Sopra (Arezzo) (IT)
(72) Inventor: Brogi, Loriano, 52020 Castelfranco di Sopra (Arezzo) (IT)
(74) Representative: Modiano, Micaela Nadia

(56) References cited:
- FR-A- 2 651 089
- GB-A- 1 211 250
- US-A- 2 676 448
- US-A- 3 157 015
- US-A- 3 806 042
- US-A- 4 631 828
- US-A- 5 600 943

## Description

The invention relates to a flexible cutting group for bush-cutters with which one can cut and shred grass, shrubs, bushes, brambles and shoots, to be used in gardening, agriculture and forestry.

At the present state of the art there are known bush-cutters, on whose motorized head, placed at the end of the handle shaft, in one case a head is anchored from which two or more pieces of nylon wire emerge like rays, while in another case a steel disc is anchored with protruding blades, fixed or mobile, that is capable of oscillating on the plane of rotation around the anchorage axis.

The use of the head with protruding nylon wires make the utensil appropriate for cutting and shredding soft vegetables and in particular grasses, shrubs and other vegetables easy to cut.

The use of the disc with protruding steel blades makes the bush-cutter appropriate for cutting brambles, wood shrubs and tree shoots, therefore capable of cutting wood products or in any case very strong ones.

The use of the head with pieces of protruding nylon wire allows the cutting of grasses and thin shrubs even if they are close to rigid structures such as plants, walls and in particular drywalls, where grasses and shrubs sprout between the stones.

On the one hand, the use, near plants and walls, is advantageous because it eliminates the use of scissors and other cutting tools, on the other hand it causes the rapid wear of the cutting wires and the need of frequent interruptions in the mowing operations to allow the operator to pull the protruding wires out so that they reach the right extension from the cutting head, as they wear out.

The use of the disc with protruding steel blades allows the cutting of resistant vegetable products without the need for interruptions in the cutting operation, as long as this operation is not carried out close to the trunks of plants, near walls or in any case items that are mechanically very hard and resistant. In fact, if it is used near rigid and resistant elements the bush-cutter undergoes violent shocks and sudden bumps against the hit surfaces, causing danger and risk of physical stress to the operator, and with the danger of breaking the disc and the necessity for frequent sharpening of the equipment's protruding blades.

The known cutting means to be applied to the bush-cutters do not therefore solve the problem in the event in which the cutting is carried out in the woods with woody stem bushes and tall trunk vegetation, in the fields with plants such as olives, and in terraced fields with different levels held up by drywalls where there is an abundant growth of sturdy grasses, shrubs and a variety of resistant vegetation.

US-A-3 806 042 discloses a flexible cutting group suitable for cutting grasses and shrubs as in the preamble of claim 1.

One of the aims of the present invention is the manufacture of a cutting means, that is easy to produce and with a low cost, which can be applied to the head of a bush-cutting utensil.

Another aim of the present invention is the manufacture of a cutting means that is capable of also cutting very resistant shrubs, shoots and brambles and, at the same time, is elastic enough so that it does not cause sudden shocks on the bush-cutter shaft and consequent rebounds, and will therefore be capable of flexing against the resistant bodies it hits against and at the same time carries out the cutting and shredding of shrubs, even if hard and resistant.

These and other aims will be obtained with a flexible cutting group as set out in claim 1.

Said invention is particularly advantageous since it is low cost, easy to manufacture, and requires minimal maintenance.

It is described by the detailed description which follows, referred to the drawings exemplifying the preferred embodiment, in which:
- Fig. 1 is the plan view of an embodiment of the anchor plate shaped like a lozenge, supplied with a central hole and combined with two pieces of chain protruding from it;
- Fig. 2 is the side view of the same plate with pieces of chain of fig. 1;
- Fig. 3 is the plan view of the anchor plate in the solution in which it
- has a rectangular profile with curved shorter sides;
- Fig. 4 is the exploded side view of the invention which illustrates the anchor plate, two groups of bolts and a piece of chain;

It is understood that the drawings have only an exemplifying character, with the only aim of aiding the comprehension of the invention, without constituting, in any way, a limitation.

In substance, the invention consists therefore of a flexible cutting group for bush-cutters, with which to carry out, in particular, the cutting and shredding of grass and strong woody shrubs, therefore for bush-cutters that are suitable for gardening, agriculture and forestry.

The invention consists of a rigid anchor plate 1, normally of steel, supplied at the centre with a hole 2 for its fastening to the motorized rotating shaft of the bush-cutter.

Said plate 1 is furnished with fastening means 3 situated in points distributed symmetrically on its edge, so as to determine, when it is rotating, balanced stresses on the bush-cutter and make it easy to use.

The invention includes, furthermore, pieces of metal chain 4, normally of steel, anchored to said fastening means 3 in a removable way, so as to allow their regular substitution.

When said pieces of chain 4 rotate, they extend sideways and can oscillate around this direction, so as to carry out the cutting and shredding of grasses, bushes and of the other vegetation for which they therefore act as cutting and shredding means.

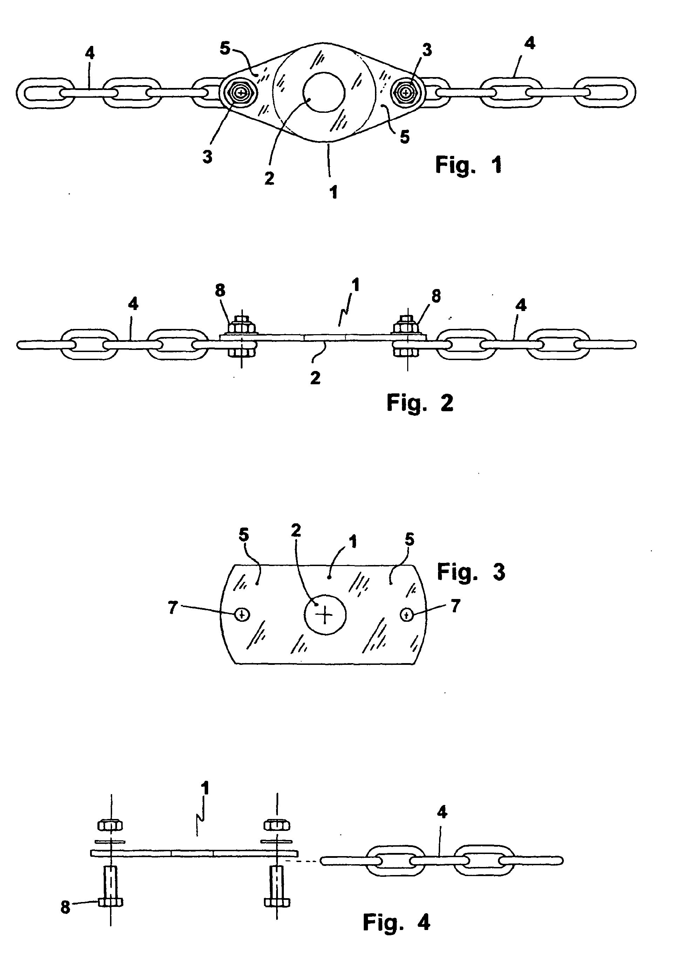

The anchor plate 1, in the solution exemplified in figures 1 and 3, is equipped with two opposite arms 5. In any case, it can have a plurality of arms, in a radial direction with respect to the centre of the hole 2, distributed symmetrically so that the head of the bush-cutter is balanced when it is made to rotate. Each of said arms 5, near its end, has a point with a means 3 for anchoring the cutting means in a removable way.

Each fastening means 3, in the preferred embodiment, consists of a hole 7 on the plate 1 and by a bolt 8, preferably of the self-blocking type, or in any way such as to withstand loosening as a consequence of normal stresses.

Each flexible means, aimed at carrying out the cutting and shredding, is composed of a piece of chain 4, for example of the "cable chain" type with elongated links, with appropriate dimensions for cutting and shredding efficiently the woody brush encountered during the use and therefore with variable dimensions and strength according to the area in which the bush-cutter will be used. Therefore said pieces of chains will be made of wire or section iron of various dimensions, depending on whether the bush-cutter is used for gardening or forestry. The pieces of chain 4, which constitute the cutting and shredding means, can have varying lengths and in any case are equal one to the other, in length and shape, each one having a length from 8 to 30 cm., preferably a length of around 15 cm.

The present invention is advantageous since its cutting means 4 can be periodically and easily substituted with new ones, maintaining the cutting group in a state of high efficiency with a minimal cost. It is advantageous because the pieces of chain 4, that act as cutting and shredding means, are flexible, therefore they allow the cutting and shredding of shrubs, shoots and grasses even around the roots of plants, such as olives, and that sprout near walls or between the stones of drywalls, without causing excessive vibrations on the bush-cutter and therefore without causing high stress on the operator.

During the production phase, the details of the invention may undergo variations in shape, in particular the anchor plate 1 may be shaped like a disc, while maintaining the logic that governs its function, without said variations being deemed as going out of the aim of the patent as defined by the following claims.

## Claims

1. A flexible cutting group for bush-cutters, for cutting and shredding grasses and shrubs, comprising an anchor plate (1) equipped at the centre with a hole (2) for its fastening to the rotating motorized group of the bush-cutter and with fastening means (3) distributed around its edge in a symmetrical way, pieces of metal chain (4),suitable to operate as cutting and shredding means, being each one, at one of its ends, fastened in a removable way to one of the said fastening means (3), **characterized in that** said anchor plate (1) has a plurality of arms (5) aimed in a radial direction with respect to the centre of the anchor hole (2) and distributed symmetrically, each of said arms (5) having near its end, a means (3) for fastening in a removable way, a piece of steel chain (4).

2. The flexible cutting group, as claimed in claim 1, **characterized by** the fact that each arm (5) is equipped, near its end, with a hole (7) for the removable anchoring of a piece of chain (4).

3. The flexible cutting group, as claimed in claim 1, **characterized by** the fact that the fastening means (3) are constituted each of a bolt (8) with the relative nut.

4. The flexible cutting group, as claimed in claim 1, **characterized by** the fact that the flexible cutting means are constituted by pieces of steel chain (4) of the "cable chain" type with elongated links.

5. The flexible cutting group, as claimed in claim 1, **characterized by** the fact that the pieces of chain (4), which make up the flexible cutting and shredding means, are equal one to other, in length and shape, and each of them has a length between 8 and 30 cm.

6. The flexible cutting group, as claimed in claim 1, **characterized by** the fact that the pieces of chain (4), that make up the flexible cutting and shredding means, are equal one to the other, in length and shape, and each of them has a length of about 15 cm.

## Patentansprüche

1. Eine biegsame Schneidgruppe für. Buschschneider, zum Schneiden und Zerkleinern von Gräsern und Sträuchern, die eine Ankerplatte (1) umfasst, die in der Mitte mit einem Loch (2) zu ihrer Befestigung an der sich drehenden motorisierten Gruppe des Buschschneiders und mit Befestigungsmitteln (3) versehen ist, die symmetrisch um ihren Rand angeordnet sind, wobei Stücke einer Metallkette (4), die geeignet sind, als Schneid- und Zerkleinerungsmittel zu arbeiten, jeweils an einem ihrer Enden lösbar an einem der Befestigungsmittel (3) befestigt sind, **dadurch gekennzeichnet, dass** die Ankerplatte (1) eine Vielzahl von Armen (5) hat, die in eine radiale Richtung in Bezug zur Mitte des Verankerungslochs (2) gerichtet sind und symmetrisch angeordnet sind, wobei jeder der Arme (5) nahe seinem Ende ein Mittel (3) hat, um ein Stück Stahlkette (4) lösbar zu befestigen.

2. Die biegsame Schneidgruppe wie in Anspruch 1 beansprucht, **dadurch gekennzeichnet, dass** jeder Arm (5) nahe seinem Ende mit einem Loch (7) zur lösbaren Verankerung eines Stücks der Kette (4) versehen ist.

3. Die biegsame Schneidgruppe wie in Anspruch 1 beansprucht, **dadurch gekennzeichnet, dass** die Befestigungsmittel (3) jeweils aus einem Bolzen (8) mit der dazugehörigen Mutter bestehen.

4. Die biegsame Schneidgruppe wie in Anspruch 1 beansprucht, **dadurch gekennzeichnet, dass** die biegsamen Schneidmittel aus Stücken von Stahlkette (4) vom "Kabel-Ketten"-Typ mit lang gestreckten Gliedern bestehen.

5. Die biegsame Schneidgruppe wie in Anspruch 1 beansprucht, **dadurch gekennzeichnet, dass** die Stücke von Kette (4), welche die biegsamen Schneid und Zerkleinerungsmittel bilden, einander in Länge und Form gleich sind und jedes von ihnen eine Länge zwischen 8 und 30 cm hat.

6. Die Biegsame Schneidgruppe wie in Anspruch 1 beansprucht, **dadurch gekennzeichnet, dass** die Stücke von Kette (4), welche die biegsamen Schneid- und Zerkleinerungsmittel bilden, einander in Länge und Form gleich sind und jedes von ihnen eine Länge von ungefähr 15 cm hat.

## Revendications

1. Outil de coupe souple pour débroussailleuse, servant à couper et déchiqueter des herbes et des broussailles, comprenant une plaque d'accrochage (1) pourvue d'un trou (2) en son centre pour la fixation de celle-ci à l'outil rotatif motorisé de la débroussailleuse et munie de moyens de fixation (3) répartis de manière symétrique sur le bord de celle-ci, des maillons (4) de chaîne métallique destinés à servir de moyens de coupe et de déchiquetage et fixés chacun, en l'une de ses extrémités, de manière amovible à l'un desdits moyens de fixation (3), **caractérisé en ce que** ladite plaque d'accrochage (1) possède une pluralité de bras (5) orientés dans une direction radiale par rapport au centre du trou d'accrochage (2) et répartis symétriquement, chacun desdits bras (5) ayant, près de son extrémité, un moyen (3) pour fixer de manière amovible un morceau (4) de chaîne métallique.

2. Outil de coupe souple selon la revendication 1, **caractérisé en ce que** chaque bras (5) est pourvu, près de son extrémité, d'un trou (7) pour l'accrochage d'un morceau amovible (4) de chaîne.

3. Outil de coupe souple selon la revendication 1, **caractérisé en ce que** les moyens de fixation (3) sont constitués chacun par un boulon (8) avec l'écrou correspondant.

4. Outil de coupe souple selon la revendication 1, **caractérisé en ce que** les moyens de coupe souples sont constitués par des morceaux (4) de chaîne en acier du type "chaîne câble" à maillons allongés.

5. Outil de coupe souple selon la revendication 1, **caractérisé en ce que** les morceaux (4) de chaîne qui constituent les moyens de coupe et de déchiquetage souples ont les uns et les autres la même longueur et la même forme et chacun d'eux a une longueur de 8 à 30 cm.

6. Outil de coupe souple selon la revendication 1, **caractérisé en ce que** les morceaux (4) de chaîne qui constituent les moyens de coupe et de déchiquetage souples ont les uns et les autres la même longueur et la même forme et chacun d'eux a une longueur d'environ 15 cm.
